## Europäisches Patentamt

## European Patent Office

## Office européen des brevets

(19)

(11) Veröffentlichungsnummer: **0 099 007**
**B1**

(12) **EUROPÄISCHE PATENTSCHRIFT**

(45) Veröffentlichungstag der Patentschrift:
**08.10.86**

(51) Int. Cl.⁴: **F 16 D 65/00**

(21) Anmeldenummer: **83106152.8**

(22) Anmeldetag: **23.06.83**

(54) **Schutzeinrichtung für die Führungsflächen teleskopisch verschieblicher Rohrkörper.**

(30) Priorität: **02.07.82 DE 3224839**

(43) Veröffentlichungstag der Anmeldung:
**25.01.84 Patentblatt 84/4**

(45) Bekanntmachung des Hinweises auf die Patenterteilung:
**08.10.86 Patentblatt 86/41**

(84) Benannte Vertragsstaaten:
**CH DE FR GB LI SE**

(56) Entgegenhaltungen:
**DE - A - 2 106 171**
**DE - A - 2 834 990**
**DE - B - 1 425 415**
**DE - B - 2 217 309**
**FR - A - 1 124 617**
**US - A - 3 837 443**

(73) Patentinhaber: **KNORR-BREMSE AG, Moosacher Strasse 80 Postfach 401060, D-8000 München 40 (DE)**

(72) Erfinder: **Nadas, Julius, Trezzanostrasse 13, D-8057 Eching (DE)**

ACTORUM AG

## Beschreibung

Die Erfindung bezieht sich auf eine Schutzeinrichtung für die Führungsflächen zweier aus einer Ruhelage in einer Richtung teleskopisch relativ verschieblicher Rohrkörper vor Verschmutzung und Korrosion in der Ruhelage, insbesondere für einer selbsttätigen Bremsgestänge-Nachstellvorrichtung von Schienenfahrzeugbremsen zugehörende Rohrkörper, mit zwei axial zueinander versetzt angeordneten Dichtungen im Ringspalt zwischen den beiden Rohrkörpern, wobei einer der Rohrkörper zwischen den beiden Dichtungen eine Führungsfläche aufweist.

Eine Schutzvorrichtung der vorstehend genannten Art ist der DE-A-28 34 990 für die Lagerung einer Steuerungshülse entnehmbar. Bei dieser bekannten Anordnung muss – wie bei teleskopisch relativ verschieblichen Rohrkörpern ganz allgemein – mindestens eine von den beiden die gegenseitige Führung der Rohrkörper vermittelnden Dichtungen bei Relativverschiebungen auf eine Oberfläche aufgleiten, welche in der Ruhelage der Rohrkörper offenliegt, so dass sich an ihr Verunreinigungen ansetzen und infolge von Witterungseinflüssen Korrosion ausbilden kann. Beim Aufgleiten der Dichtung auf diese verunreinigte Oberfläche werden die Verunreinigungen teilweise abgestreift, doch wird trotzdem die Dichtung stark abrasiv angegriffen und eventuell sogar beschädigt; die Lebensdauer der Dichtung wird durch diese Einflüsse jedenfalls stark verkürzt. Durch die Verschmutzung und Korrosion kann auch die Führungsfläche, auf welcher die Dichtung aufgleitet, beschädigt werden, wodurch aufwendige Reparaturarbeiten anfallen. Schliesslich kann durch die erwähnte Verschmutzung bzw. Korrosion eine Schwergängigkeit verursacht werden, welche die Funktionssicherheit des Gerätes, welchem die teleskopisch relativverschieblichen Rohrkörper zugehören, beeinträchtigen kann.

Es ist allgemein bekannt, besonders geschützte Oberflächen wie beispielsweise hartverchromte Oberflächen, verkürzte Wartungsintervalle oder auch Schutzbalgabdeckungen vorzusehen. Diese Massnahmen sind mit erhöhten Kosten bzw. erhöhtem Arbeitsaufwand verbunden und vermögen das Grundproblem nicht zu lösen. Die bekannten Schutzbalgabdeckungen verlieren zudem oftmals durch Beschädigungen des Schutzbalges bzw. seiner Halterung ihre Wirkung.

Es ist Aufgabe der Erfindung, eine Schutzeinrichtung der eingangs genannten Art derart auszubilden, dass die Führungsflächen für die relativverschieblichen Rohrkörper in deren Ruhelage vor Verschmutzung und Korrosion geschützt sind, wodurch eine Grundvoraussetzung für lange, wartungsfreie Betriebszeiten geschaffen wird.

Diese Aufgabe wird nach der Erfindung dadurch gelöst, dass jeder der beiden Rohrkörper eine axial auf ihm gehaltene, gegen die Führungsfläche des jeweils anderen Rohrkörpers axial verschieblich dichtende und gegebenenfalls eine Abstreifkante aufweisende Dichtung und hierzu in seiner Verschieberichtung relativ zum anderen Rohrkörper axial versetzt seine Führungsfläche aufweist und dass der axiale Abstand der beiden Dichtungen in der Ruhelage der Rohrkörper gleich oder grösser als der maximale Verschiebehub der beiden Rohrkörper ist. Hierdurch wird erreicht, dass die Führungsflächen beider Rohrkörper in deren Ruhelage geschützt zwischen den beiden Dichtungen liegen und somit während der langen Zeiten, während welcher sich die Rohrkörper in ihrer Ruhelage befinden, vor Verschmutzung und Korrosion geschützt sind.

Nach der weiteren Erfindung mögliche, vorteilhafte Weiterbildungen der Schutzeinrichtung können den Unteransprüchen entnommen werden.

In der Zeichnung sind zwei Ausführungsbeispiele für nach der Erfindung ausgebildete Schutzeinrichtungen dargestellt, und zwar zeigt

Figur 1 einen Grundaufbau der Schutzeinrichtung in schematischer Darstellung, und

Figur 2 ebenfalls in schematischer Darstellung eine Schutzeinrichtung in ihrer Anwendung bei einer Gestänge-Nachstellvorrichtung von Schienenfahrzeugbremsen.

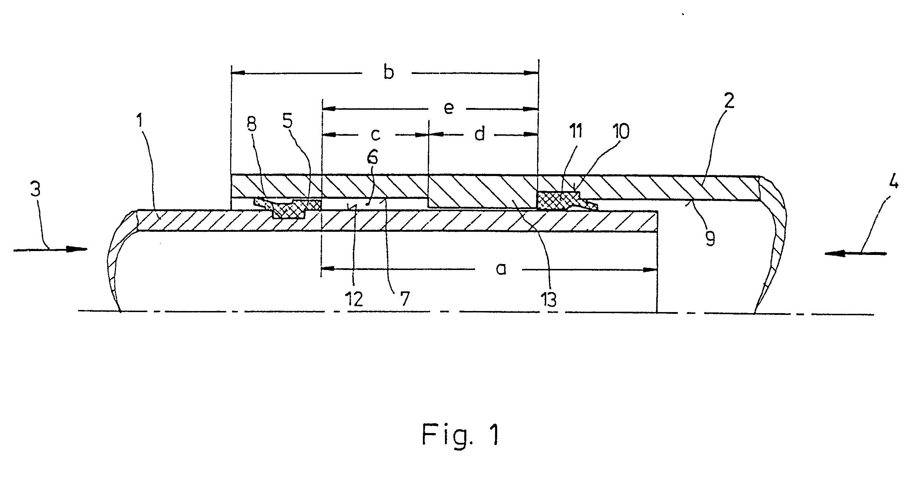

In Fig. 1 sind zwei konzentrische und einander teilweise übergreifende Rohrkörper 1 und 2 dargestellt, welche aus der gezeigten Ruhelage in einer Richtung teleskopisch zueinander relativ-verschieblich sind: Bei dieser Relativverschiebung erfährt der Rohrkörper 1 eine Verschiebung in Pfeilrichtung 3 und/oder der Rohrkörper 2 eine Verschiebung in Pfeilrichtung 4. Der Rohrkörper 1 weist in einem Abstand a von seinem in Pfeilrichtung 3 liegenden, in das Rohrteil 2 eingreifende Ende an seinem Aussenumfang eine axial unverschieblich gehaltene Dichtung 5 auf, welche den Ringspalt 6 zwischen den beiden Rohrkörpern 1 und 2 überbrückt und mit ihren Dichtflächen an der Innenwandung 7 des Rohrkörpers 2 anliegt. Die Dichtung 5 kann, wie aus Fig. 1 ersichtlich, zu ihrer Halterung in eine Ringnut 8 am Aussenumfang des Rohrkörpers 1 eingreifen; sie kann weiterhin in der für Manschettendichtungen üblichen Weise mit einer ebenfalls mit der Innenwandung 7 zusammenwirkenden Abstreifkante versehen sein.

In entsprechender Weise ist der Rohrkörper 2 an seinem Innenzylinder 9 mit einer durch Eingreifen in eine Ringnut 10 axial unverschieblich gehaltenen Dichtung 11 versehen, deren Dichtkante und gegebenenfalls vorhandene Abstreifkante mit dem Aussenzylinder 12 des Rohrkörpers 1 zusammenwirken. Die Dichtung 11 befindet sich in einem Abstand b vom in Pfeilrichtung 4 liegenden Ende des Rohrkörpers 2. Die Abstände a und b sind im wesentlichen gleich gross, sie unterscheiden sich lediglich um die in Pfeilrichtung 3 bzw. 4 liegenden Überstände der Rohrkörper 1 bzw. 2 über die dem jeweilig anderen Rohrkörper 2 bzw. 1 zugehörende Dichtung 11 bzw. 5 in der Ruhelage der beiden Rohrkörper 1 und 2.

In der Ruhelage der Rohrkörper 1 und 2 weist der Rohrkörper 2 in Pfeilrichtung 4 im Abstand c vor der Dichtung 5 einen radial nach innen vorspringenden und die radiale Weite des Ringspaltes 6 bis auf eine Schiebeführung verringernden Vorsprung 13 auf, welcher sich entgegen der Pfeilrichtung 4 in einer Länge d bis zur Dichtung 11 erstreckt. Der gegenseitige Abstand e der Dichtungen 5 und 11 entspricht somit der Summe des Abstandes c und der Länge d. Der Abstand c ist gleich oder grösser dem maximalen Verschiebehub, um welchen die beiden Rohrteile 1 und 2 relativ zueinander aus ihrer Ruhelage verschiebbar sind. Die Innenwandung 7 des Rohrkörpers 2 im Bereich des Abstandes c stellt eine dem Rohrkörper 2 zugehörende Führungsfläche und der Aussenzylinder 12 des Rohrkörpers 1 im Bereich des Abstandes e eine dem Rohrkörper 1 zugehörende Führungsfläche dar.

Die beiden Führungsflächen 7 und 12 befinden sich in der Ruhelage der beiden Rohrkörper 1 und 2 zwischen den beiden Dichtungen 5 und 11 und sind somit gegen Eindringen von Fremdkörpern, Schmutz und Feuchtigkeit gut geschützt. Beim Relativverschieben wenigstens eines der beiden Rohrkörper 1 und/oder 2 in der jeweiligen Pfeilrichtung 3 bzw. 4 gleiten die Dichtungen 5 und 11 auf der Führungsfläche 7 bzw. 12, während der Vorsprung 13 in seinem Zusammenwirken mit der Führungsfläche 12 sowohl in der Ruhelage wie auch während der Relativverschiebung die beiden Rohrkörper 1 und 2 gegeneinander führt. Durch die geschützte Lage der Führungsflächen 7 und 12 weisen diese auch nach längeren Stand- bzw. Ruhezeiten eine einwandfreie und saubere, korrosionsfreie Beschaffenheit auf, die Relativverschiebung der beiden Rohrkörper 1 und 2 kann daher stets leicht, unter nur geringer Reibung und ohne Beschädigung der Dichtungen 5 und/oder 11 und/oder der Führungsflächen 7 bzw. 12 bzw. des Vorsprunges 13 erfolgen.

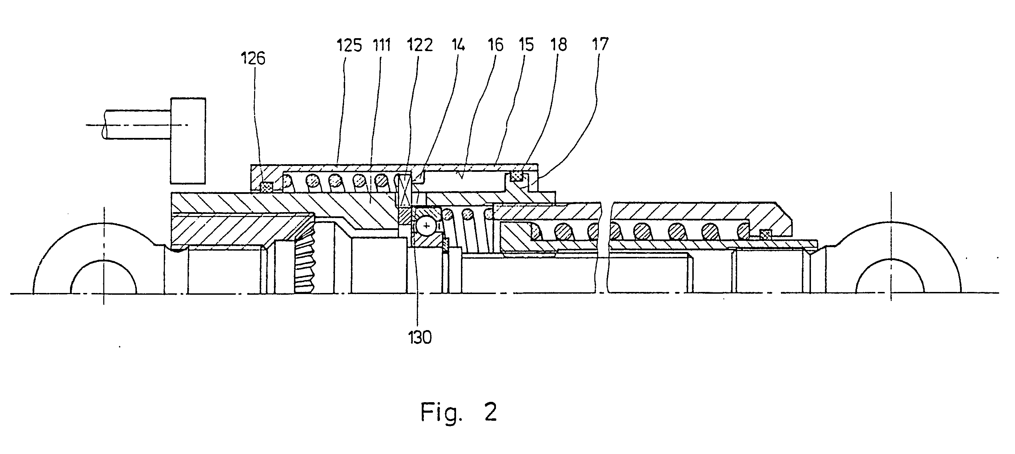

In Fig. 2 ist eine selbsttätige Bremsgestänge-Nachstellvorrichtung für Schienenfahrzeugbremsen dargestellt, wie sie sowohl in ihrem Aufbau wie in ihrer Funktion in der DE-A-28 34 990 beschrieben und gezeigt ist, so dass sich weitere Erläuterungen zu dieser Bremsgestänge-Nachstellvorrichtung hier erübrigen. In der folgenden Beschreibung werden durch Addition von 100 ergänzte Bezugszahlen entsprechend der DE-A-28 34 990 verwendet. Die Steuerhülse 125 trägt rechts vom Arm 122 einen radial nach innen vorspringenden und die Begrenzungsfläche 130 aufweisenden Ringflansch 14; im Anschluss nach rechts weist die Steuerhülse 125 einen Abschnitt 15 auf, welcher an seinem Innenumfang mit einer innenzylindrischen Führungsfläche 16 versehen ist. Der Abschnitt 111 weist rechts vom Ringflansch 14 in einem den maximalen Festbremshub zumindest erreichenden Abstand zum Ringflansch 14 einen radial nach aussen ragenden Vorsprung 17 auf, in welchem eine mit der Führungsfläche 16 zusammenwirkende Dichtung 18 verankert ist. Der weitere Aufbau der Bremsgestänge-Nachstellvorrichtung entspricht der bekannten Anordnung nach der DE-A-28 34 990.

Es ist ersichtlich, dass beim Verschieben der Steuerhülse 125 die Dichtungen 18 und 126 stets auf geschützte Führungsflächen 16 bzw. am Aussenumfang des Abschnittes 111 aufgleiten, die Verschiebung der Steuerhülse 125 kann daher unter geringer Reibung und ohne übermässige Beanspruchung der Dichtungen 18 bzw. 126 erfolgen.

Die Steuerhülse 125 stellt beim Ausführungsbeispiel nach Fig. 2 einen relativverschieblichen Rohrkörper dar, der den ebenfalls einen Rohrkörper darstellenden Abschnitt 111 ringartig umgibt. In der Ruhelage der Rohrkörper 111 und 125 befinden sich die Dichtungen 18 und 126 nahe der Enden des ringartigen Rohrkörpers 125.

In Abänderung zu den vorbeschriebenen Ausführungsbeispielen kann nach Fig. 1 der Vorsprung 13 entfallen, wobei die beiden Dichtungen 5 und 11 die gegenseitige Führung der Rohrkörper 1 und 2 übernehmen und nur zumindest den Abstand c aufweisen müssen.

**Patentansprüche**

1. Schutzeinrichtung für die Führungsflächen (7, 12 bzw. 16) zweier aus einer Ruhelage in einer Richtung teleskopisch relativ verschieblicher Rohrkörper (1, 2 bzw. 111, 125) vor Verschmutzung und Korrosion in der Ruhelage, insbesondere für einer selbsttätigen Bremsgestänge-Nachstellvorrichtung von Schienenfahrzeugbremsen zugehörende Rohrkörper (111, 125), mit zwei axial zueinander versetzt angeordneten Dichtungen (5, 11 bzw. 18, 126) im Ringspalt (6) zwischen den beiden Rohrkörpern, wobei einer der Rohrkörper zwischen den beiden Dichtungen eine Führungsfläche aufweist, dadurch gekennzeichnet, dass jeder der beiden Rohrkörper (1, 2 bzw. 111, 125) eine axial auf ihm gehalterte, gegen die Führungsfläche (7, 12 bzw. 16) des jeweils anderen Rohrkörpers axial verschieblich dichtende und gegebenenfalls eine Abstreifkante aufweisende Dichtung (5, 11 bzw. 18, 126) und hierzu in seiner Verschieberichtung (Pfeilrichtung 3 bzw. 4) relativ zum anderen Rohrkörper versetzt seine Führungsfläche aufweist und dass der axiale Abstand (e) der beiden Dichtungen in der Ruhelage der Rohrkörper gleich oder grösser als der maximale Verschiebehub der beiden Rohrkörper ist.

2. Schutzeinrichtung nach Anspruch 1, wobei der eine Rohrkörper (125) ringartig ausgebildet ist und den anderen Rohrkörper (111) umschliesst, dadurch gekennzeichnet, dass die Dichtungen (18, 126) sich in der Ruhelage der Rohrkörper nahe der beiden axialen Enden des ringartigen Rohrkörpers (125) befinden.

3. Schutzeinrichtung nach Anspruch 1, dadurch gekennzeichnet, dass sich im Ringspalt (6) axial zwischen den beiden Dichtungen (5, 11) ein Abschnitt (Vorsprung 13) verringerter Ringspaltweite befindet und dass der axiale Abstand (e) der beiden Dichtungen gleich oder grösser als die Summe aus maximalem Verschiebehub und axialer Länge (d) des Abschnittes ist.

## Revendications

1. Dispositif de protection contre l'encrassement et la corrosion, dans la position de repos, pour les surfaces de guidage (7, 12 ou 16) de deux corps tubulaires (1, 2; 111, 125) déplaçables téléscopiquement l'un par rapport à l'autre, dans une direction, à partir de la position de repos, en particulier de deux corps tubulaires (111, 125) appartenant à un dispositif automatique de rattrapage du jeu de la tringlerie de freins pour véhicules sur rails, du type comportant, dans la fente annulaire (6) entre les deux corps tubulaires, deux éléments d'étanchéité (5, 11; 18, 126) décalés axialement entre eux, alors que l'un des corps tubulaires présente une surface de guidage entre les deux éléments d'étanchéité, caractérisé par le fait que chacun des deux corps tubulaires (1, 2; 111, 125) comporte un élément d'étanchéité monté axialement, déplaçable axialement et avec étanchéité par rapport à la surface de guidage (7, 12; 161) de l'autre corps tubulaire en comportant éventuellement une arête de raclage, alors que sa surface de guidage est décalée, dans le sens du déplacement (sens de la flèche 3 ou 4) par rapport à l'autre corps tubulaire, et que la distance axiale (e) entre les deux éléments d'étanchéité est, dans la position de repos des corps tubulaires, égale ou supérieure à la course maximale des deux corps tubulaires.

2. Dispositif de protection selon la revendication 1, du type dans lequel l'un des corps tubulaires (125) est réalisé de façon annulaire et entoure l'autre corps tubulaire (111), caractérisé par le fait que les éléments d'étanchéité (18, 126) se situent, dans la position de repos des corps tubulaires, près des deux extrémités axiales du corps tubulaire (125) réalisé de façon annulaire.

3. Dispositif de protection selon la revendication 1, caractérisé par le fait qu'il est prévu, dans la fente annulaire (6), axialement entre les deux éléments d'étanchéité (5, 11), une section (partie saillante 13) à largeur de fente annulaire réduite, et que la distance axiale (e) entre les deux éléments d'étanchéité est égale ou supérieure à la somme de la course maximale et de la longueur axiale (d) de la section.

## Claims

1. Protective device, against fouling and corrosion in the rest position, for the guide surfaces (7, 12 or 16) of two telescopic tubular bodies (1, 2 or 111, 125) relatively displaceable out of a rest position in one direction, in particular for an automatic brake rod-adjusting device in tubular bodies (111, 125) belonging to rail vehicle brakes, having two seals (5, 11 or 18, 126), arranged to be axially displaced with respect to each other, in the annular gap (6) between the two tubular bodies, whereby one of the tubular bodies has a guide surface between the two seals, characterised in that each of the two tubular bodies (1, 2 or 111, 125) has a tight seal (5, 11 or 18, 126) mounted axially on it, axially displaceable with respect to the guide surface (7, 12 or 16) of the respective other tubular body, and if need be having a stripping edge, and in addition in its movement direction (arrow direction 3 or 4) has its guide surface displaced relatively to the other tubular body, and in that the axial spacing (e) between the two seals in the rest position of the tubular bodies is the same as or greater than the maximum displacement stroke of the two tubular bodies.

2. Protective device according to claim 1, whereby one of the tubular bodies (125) is of annular design and encloses the other tubular body (111), characterised in that in the rest position of the tubular bodies the seals (18, 126) are near the two axial ends of the annular tubular body (125).

3. Protective device according to claim 1, characterised in that in the annular gap (6) a section (projection 13) of reduced annular gap width is axially located between the two seals (5, 11), and in that the axial spacing (e) between the two seals is the same as or greater than the sum of the maximum displacement stroke and axial length (d) of the section.

Fig. 1

0 099 007

Fig. 2

125 111 122 14 16 15 18 17

126

130

0 099 007

2/2